(19) Europäisches Patentamt / European Patent Office / Office européen des brevets

(11) **EP 1 967 789 A1**

(12) **EUROPEAN PATENT APPLICATION**

(43) Date of publication:
**10.09.2008 Bulletin 2008/37**

(51) Int Cl.:
***F21V 8/00*** (2006.01)

(21) Application number: **08152486.0**

(22) Date of filing: **07.03.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **07.03.2007 US 905492 P**

(71) Applicant: **Rohm and Haas Denmark Finance A/S 2100 Copenhagen (DK)**

(72) Inventors:
• **Hong, Qi**
  **Rochester, NY 14615 (US)**
• **Mi, Xiang-Dong**
  **Rochester, NY 14623 (US)**

(74) Representative: **Buckley, Guy Julian**
  **Rohm and Haas Europe Services ApS - UK Branch**
  **European Patent Department**
  **4th Floor**
  **22 Tudor Street**
  **London**
  **EC4Y 0AY (GB)**

(54) **Polarizing turning film with reduced color separation**

(57)    The disclosure describes a turning film and a backlight containing the film. The turning film comprises a light entry and a light exit surface comprising first prismatic structures on the exit surface and second prismatic structures or lenticular structures on the light entry surface, wherein
(a) the first prismatic elements are characterized by a far base angle ($\beta_1$) and a near base angle ($\beta_2$); and
(b) the second prismatic or lenticular elements are characterized by a far base angle ($\gamma_1$) and a near base angle ($\gamma_2$);

provided that the values of the angles in subparagraphs (a) and (b) are selected to provide a reduced degree of color separation compared to the same film with only the first prismatic elements on the exit surface.
The invention further relates to providing a polarized light output.

**FIG. 4**

**Description**

**FIELD OF THE INVENTION**

This invention generally relates to display illumination articles for enhancing luminance from a surface and more particularly relates to a turning film with structures on both sides that redirects light from a light guiding plate and provides polarized light output and reduces color separation.

**BACKGROUND OF THE INVENTION**

Liquid crystal displays (LCDs) continue to improve in cost and performance, becoming a preferred display type for many computer, instrumentation, and entertainment applications. The transmissive LCD used in conventional laptop computer displays is a type of backlit display, having a light providing surface positioned behind the LCD for directing light outwards, towards the LCD. The challenge of providing a suitable backlight apparatus having brightness that is sufficiently uniform while remaining compact and low cost has been addressed following one of two basic approaches. In the first approach, a light-providing surface is used to provide a highly scattered, essentially Lambertian light distribution, having an essentially constant luminance over a broad range of angles. Following this first approach, with the goal of increasing on-axis and near-axis luminance, a number of brightness enhancement films have been proposed for redirecting a portion of this light having Lambertian distribution in order to provide a more collimated illumination. Among proposed solutions for brightness enhancement films are those described in U.S. Patent No. 5,592,332 (Nishio et al.); U.S. Patent No. 6,111,696 (Allen et al); and U.S. Patent No. 6,280,063 (Fong et al.), for example. Solutions such as the brightness enhancement film (BEF) described in patents cited above provide some measure of increased brightness over wide viewing angles.

A second approach to providing backlight illumination employs a light guiding plate (LGP) that accepts incident light from a lamp or other light source disposed at the side and guides this light internally using Total Internal Reflection (TIR) so that light is emitted from the LGP over a narrow range of angles. The output light from the LGP is typically at a fairly steep angle with :respect to normal, such as 70 degrees or more. With this second approach, a turning film, one type of light redirecting article, is then used to redirect the emitted light output from the LGP toward normal. Directional turning films, broadly termed light-redirecting articles or light-redirecting films, such as that provided with the HSOT (Highly Scattering Optical Transmission) light guiding panel available from Clarex, Inc., Baldwin, NY, provide an improved solution for providing a uniform backlight of this type, without the need for diffusion films or for dot printing in manufacture. HSOT light guiding panels and other types of directional turning films use arrays of prism structures, in various combinations, to redirect light from a light guiding plate toward normal, or toward some other suitable target angle that is typically near normal relative to the two-dimensional surface. As one example, U.S. Patent No. 6,746,130 (Ohkawa) describes a light control sheet that acts as a turning film for LGP illumination.

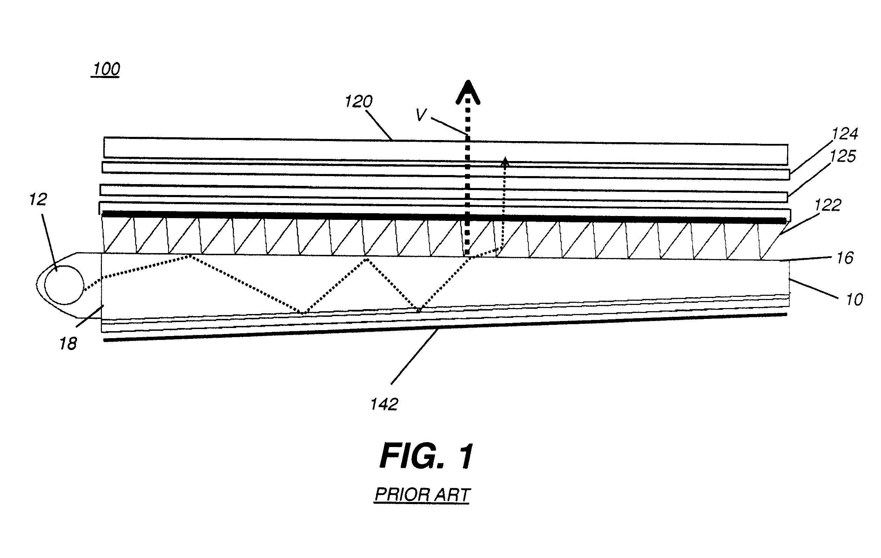

Referring to Figure 1, the overall function of a light guiding plate 10 in a display apparatus 100 is shown. Light from a light source 12 is incident at an input surface 18 and passes into light guiding plate 10, which is typically wedge-shaped as shown. The light propagates within light guiding plate 10 until Total Internal Reflection (TIR) conditions are frustrated and then, possibly reflected from a reflective surface 142, exits light guiding plate at an output surface 16. This light then goes to a turning film 122 and is directed to illuminate a light-gating device 120 such as an LCD or other type of spatial light modulator or other two-dimensional backlit component that modulates the light. For optimized viewing under most conditions, the emitted light should be provided over a range of relatively narrow angles about a normal V. A polarizer 124 is necessarily disposed in the illumination path in order to provide light-gating device 120 with suitably polarized light for modulation. However, since light after passing through turning film 122 is essentially unpolarized, or has at most some small degree of polarization, the polarizer 124 must absorb about half of the light. In order to overcome this problem, a reflective polarizer 125 is often provided between absorptive polarizer 124 and turning film 122.

One type of reflective polarizer is disclosed in U.S. Patents Nos. 5,982,540 and 6,172,809 entitled "Surface light source device with polarization function" to Koike et al. The Koike et al. '540 and '809 disclosures show a surface light source device that has a light guiding plate, one or more polarization separating plates, a light direction modifier (essentially a turning film), and a polarization converter. The polarization separating plate is a type of reflective polarizer 125. The polarization separating plate described in the Koike et al. '540 disclosure utilizes Brewster's angle for separating S- and P-polarized components of the illumination. While this approach provides some polarization of the light, however, it merely provides one type of substitute for more conventional reflective polarizing films. This solution still requires the additional use of separate polarizer film or film(s). Moreover, the approach of the Koike et al. '540 and '809 disclosures requires that the index of refraction n of the material used for the polarization separating plate be within a narrow range, based on the incident angle of light from the light guiding plate.

Clearly, there would be advantages to reducing the overall number of components needed to provide polarized illumination without compromising image quality and performance. With this goal in mind, there have been a number of solutions proposed for simplifying the structure of polarizer 125 or eliminating this component as a separate unit by combining functions. In an attempt to combine functions, U.S. Patent No. 6,027,220 entitled "Surface Light Source Device Outputting Polarized Frontal Illumination Light" to Arai discloses a surface light source device capable of producing illumination that is at least partially polarized. As the Arai '220 disclosure shows, there is inherently some polarization of light that emerges from light guiding plate 10 (Figure 1). In addition, there is further polarization of this light inherently performed by the turning film. In a configuration that employs a pair of turning films, there can be even further slight gains in polarization. Following the approach of the Arai '220 disclosure, a surface light source can be designed that provides some degree of polarization simply by using suitable materials for each turning film and matching these materials, according to their index of refraction $n$, to the angle of inclination of light from the light guiding plate. While this approach has merit for providing some measure of polarization, however, there are practical limits to how much improvement can be gained based on simply specifying an index of refraction n. Moreover, embodiments utilizing multiple turning films add cost, thickness, and complexity to the illumination system design.

In yet another approach, U.S. Patent No. 6,079,841 entitled "Apparatus for Increasing a Polarization Component, Light guiding Unit, Liquid Crystal Display and Polarization Method" to Suzuki, provides a light guiding plate that is itself designed to deliver polarized light. The Suzuki '841 light guiding plate utilizes a stack of light guides laminated together and oriented to provide Brewster's angle conditioning of the light to achieve a preferred polarization state. While this method has the advantage of incorporating polarization components within the light guiding itself, there are disadvantages to this type of approach. The complexity of the light guiding plate and the added requirement for a half-wave or quarter-wave plate and reflector negates the advantage gained by eliminating the polarizer as a separate component in the illumination path.

The approaches disclosed in copending US Patent Application Serial No. 11/302,011; US Patent Application Serial No.11/300,659; and U.S. Patent No. 7,139,125 entitled "Polarizing turning film using total internal reflection" to Mi, are to incorporate the polarization function within the turning film, or more broadly, within the light redirecting element of the display. These methods employ the Brewster's angle in the design of the light redirecting article's geometry and composition, thereby performing both light redirection and polarization in a single component.

One problem of the turning films that have prismatic structures facing upward is color separation due to the wavelength dependence of the refractive index of the film materials.

Thus, it can be seen that, while there have been attempts to provide polarized illumination by incorporating the polarization function with other components, these attempts have not provided satisfactory solutions. There is, then, a need for a turning film solution or backlight unit solution that provides polarized illumination with a reduced number of components and reduced color separation.

## SUMMARY OF THE INVENTION

The invention provides a turning film comprising a light entry and a light exit surface comprising first prismatic structures on the exit surface and second prismatic structures or lenticular structures on the light entry surface, wherein

(a) the first prismatic elements are characterized by a far base angle ($\beta_1$) and a near base angle ($\beta_2$); and
(b) the second prismatic or lenticular elements are characterized by a far base angle ($\gamma_1$) and a near base angle ($\gamma_2$);

provided that the values of the angles in subparagraphs (a) and (b) are selected to provide a reduced degree of color separation compared to the same film with only the first prismatic elements on the exit surface.

The invention also include a backlight employing the turning film of the invention

It is an advantage of the present invention that it provides a single component that combines turning film and polarizer functions for illumination that is incident over a range of principal angles and has reduced color separation.

## BRIEF DESCRIPTION OF THE DRAWINGS

While the specification concludes with claims particularly pointing out and distinctly claiming the subject matter of the present invention, it is believed that the invention will be better understood from the following description when taken in conjunction with the accompanying drawings.

Figure 1 is a cross-sectional view showing components of a conventional display apparatus, corresponding to Figure 1 of U.S. Patent No. 7,139,125.
Figure 2A is a schematic cross-sectional view showing a turning film with prismatic structure facing upward used with a single-wavelength incident backlight, corresponding to Figure 3A of U.S. Patent No. 7,139,125.
Figures 2B, 2C, and 2D are schematic cross-sectional views showing a turning film with prismatic structure facing upward used with a multiple-wavelength incident backlight.

Figure 3 shows the wavelength dependence of the refractive index of two commonly used optical materials.

Figure 4 is a schematic cross-sectional view showing a turning film that reduces the color separation, where prismatic structures are constructed on the bottom surface of the turning film that faces the light guiding plate.

Figure 5 is a schematic cross-sectional view showing a turning film that reduces the color separation, where lenticular or micro-lens structures are constructed on the bottom surface of the turning film that faces the light guiding plate.

Figure 6 is a schematic cross-sectional view showing components of a display apparatus with reduced color separation, where light guiding plate emits light of different principle angles for different wavelengths.

Figure 7 is a schematic cross-sectional view showing the light guiding plate and the turning film of Figure 6.

## DETAILED DESCRIPTION OF THE INVENTION

The present description is directed in particular to elements forming part of, or cooperating more directly with, apparatus in accordance with the invention. It is to be understood that elements not specifically shown or described may take various forms well known to those skilled in the art.

As was noted in the background section above, there have been attempts to reduce the overall complexity of illumination apparatus by incorporating the polarization function within other components in the illumination path. The approach of the present invention is to reduce the color separation of the turning film, or more broadly, of the light redirecting element of the display. Unlike conventional approaches described hereinabove, the method of the present invention employs microstructures one both side in the design of the light redirecting article's geometry and composition, thereby performing both light redirection and polarization in a single component.

### Turning film

As known in the art and discussed in the background, a turning film, broadly termed light-redirecting articles or light-redirecting films, is an optical film that redirects the more or less collimated light output emitted from a light guiding plate from a large off angle toward normal or viewing direction.

The apparatus of the present invention uses light-redirecting structures that are generally shaped as prisms. In more formal definition, true prisms have at least two planar faces. Because, however, one or more surfaces of the light-redirecting structures need not be planar in all embodiments, but may be curved or have multiple sections, the more general term "prismatic structure" is used in this specification.

As noted in the background material given earlier, the conventional turning film redirects light received at an oblique angle of incidence, typically 60 degrees or more from normal, from a light guiding plate or a similar light-providing component. The turning film typically employs an array of refractive structures, typically prism-shaped and of various dimensions, to redirect light from the light guiding plate toward normal. Because these are provided as films, normal is considered relative to the two-dimensional plane of the film.

As was shown with reference to Figure 1, light source 12 is placed at the side of light guiding plate 10. This positioning and the design of light guiding plate 10 having microstructures on its top and/or its bottom dictate the needed angular behavior and design layout of turning films. For a range of light guiding plate 10 performance conditions, the light redirecting article of disclosed in copending US Patent Application Serial No. 11/302,011; US Patent Application Serial No. 11/300,659; and U.S. Patent No. 7,139,125 entitled "Polarizing turning film using total internal reflection" to Mi can be used to replace conventional turning film 122 in the Figure 1 arrangement and can provide sufficient polarization to eliminate, or at least minimize the performance requirements of, either or both polarizer 124 and reflective polarizer 125.

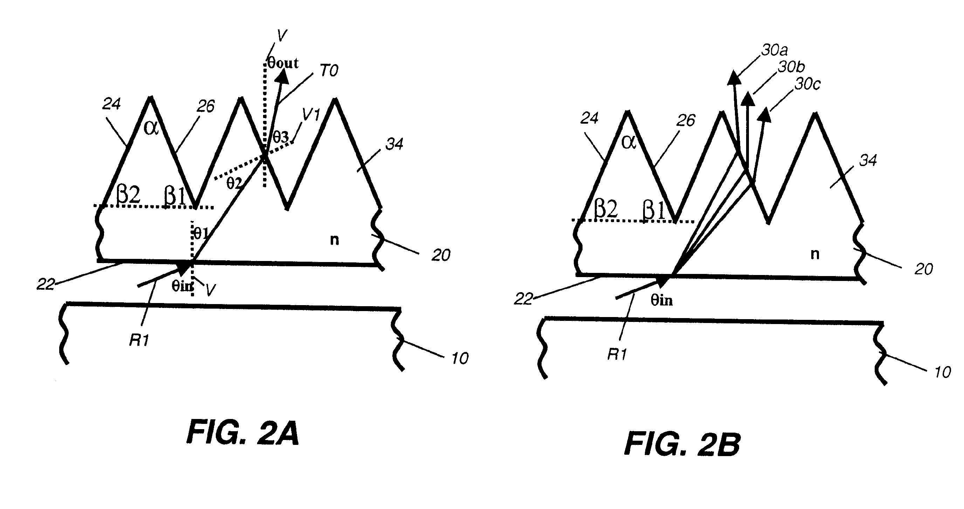

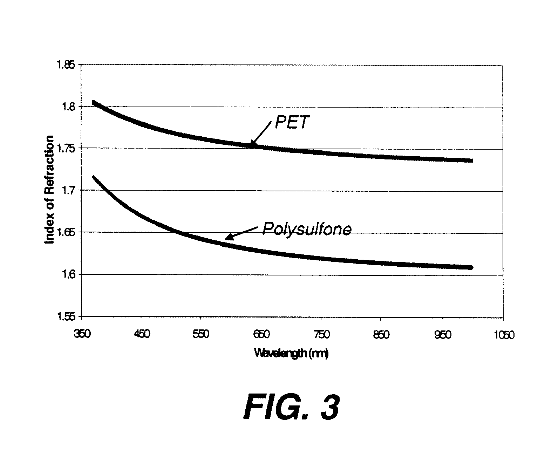

Referring to Figure 2A, which corresponds to Figure 3A of U.S. Patent No. 7,139,125, there is shown a schematic cross-sectional view of a polarizing turning film 20 used with light guiding plate 10 emitting a single-wavelength light, showing key angles and geometric relationships. Turning film 20 has a number of prismatic structures facing upwards, toward the LC device or other light modulator, each structure having a near surface 24 (being near relative to light source 12, as shown in the embodiment of Figure 1) and a far surface 26, both sides slanted from a film normal direction V as determined by an apex angle $\alpha$, and far base angle $\beta1$ and near base angle $\beta2$, relative to a horizontal H. Light from light guiding plate 10 is incident over a small range of angles about central input principal angle $\theta_{in}$. The output angle $\theta_{out}$ of light delivered to the LC display element from the structured output surface of turning film 20 is determined by a number of factors including the central input principal angle $\theta_{in}$, the refractive index n of turning film 20, and the far base angle $\beta1$ at which far surface 26 is slanted at an oblique angle relative to flat surface 22, as described by equation (1)

$$\theta_{out} = \beta_1 - \sin^{-1}\left\{ n \sin\left[ \beta_1 - \sin^{-1}\left(\frac{\sin(\theta_{in})}{n}\right) \right] \right\}. \qquad \text{Equation (1)}$$

The incident light from a light guiding plate is incident over a group of angles that are centered about a principal angle, so that most of the incident light is within +/-10 degrees of the principal angle. Equation (1) and subsequent equations use input angle $\theta_{in}$, as the principal angle.

It is noted that when a single-wavelength ray R1 emitted from light guiding plate 10, there is one beam of light coming out of the turning film 20. However, most commonly used light guiding plates coupled with a cold cathode florescent lamp (CCFL) always emit light of multiple wavelengths, or even light of continuous wavelength spectrum. Figure 2B is the same as Figure 2A except that the ray R1 represents multiple wavelengths, for example, 650 nm for red, 550 nm for green, and 450 nm for blue. Figure 2B illustrates the problem of color separation for the turning film 20; the rays 30a, 30b, 30c of three wavelengths split in the turning film 20 and split further when they emerge from the turning film 20. Because the refractive index of a typical material decreases with the wavelength, the rays 30a, 30b, 30c shown in Figure 2B can represent the blue, green, and red light respectively.

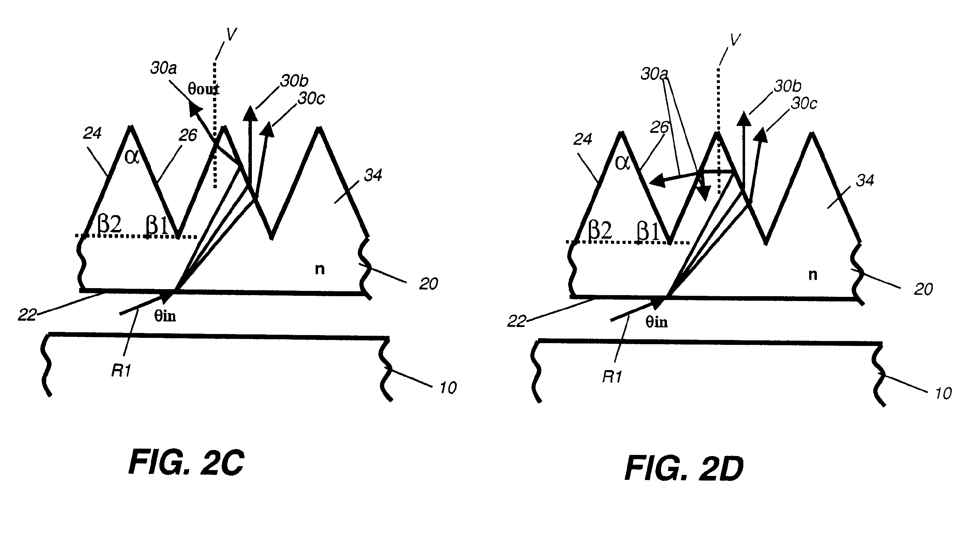

Figure 2C shows another possibility for color separation. The longer wavelength rays 30b (green light), 30c (red light) following the same light path of Figure 2B strike the far surface and emerge from the far surface 26. The shorter wavelength ray 30a (blue light) sees a higher refractive index and follow a different light path of Figure 2C. The ray 30a hits the far surface 26, subsequently is reflected toward the near surface due to total internal reflection, and finally emerges out from the near surface 24.

Figure 2D shows yet another possibility for color separation. The longer wavelength rays 30b (green light), 30c (red light) following the same light path of Figure 2B strike the far surface and emerge from the far surface 26. The shorter wavelength ray 30a (blue light) sees a higher refractive index and follow a different light path of Figure 2D. The ray 30a hits the far surface 26, subsequently is reflected toward the near surface due to total internal reflection, and is further refracted or reflected back toward the light guiding plate. In this case, ray 30a does not come out of the turning film directly.

In both Figure 2C and Figure 2D, shorter wavelength light takes very different path from longer wavelength light, resulting in a large color separation problem.

The color separation causes unpleasant color appearance when the turning film is viewed from a particular direction. This problem occurs to the turning film with its prismatic structures upward, but not so much to the turning film with its prismatic structures downward.

As is well known, the refractive indices of all optical materials are wavelength dependent (Modern Optical Engineering, Warren J. Smith, McGraw-Hill, 2000). According to Cauchy's refractive index dispersion equation, the refractive index of optical materials is governed by equation (2)

$$n = a + \frac{b}{\lambda^2} + \frac{c}{\lambda^4}, \qquad \text{Equation (2)}$$

where a, b, and c are constants that are solved for each individual material from the measured refractive index at the given wavelengths.

According to equation (1) and equation (1.1), the output angle $\theta_{out}$ is wavelength dependent because of the wavelength dependence of refractive index of the turning film materials as referring to equation (2).

Figure 3 shows the examples of the wavelength dependence of the refractive indices of two commonly used optical materials. The refractive index of poly(ethylene terephthalate) (PET) decreases from 1.8034 to 1.7367 when the incident wavelength increases from 375nm to 988nm. For polysulfone, the variation of the refractive index in the same spectrum is 0.1037. For PET, the refractive index n is approximately 1.787 at the wavelength $\lambda$ of 450 nm, 1.766 at 550 nm, and 1.754 at 650 nm. For polysulfone, the refractive index n is approximately 1.670 at the wavelength $\lambda$ of 450 nm (blue light), 1.642 at 550 nm (green light), and 1.628 at 650 nm (red light).

Degree of color separation (DCS)

To better appreciate the present invention, it is believed that a quantified degree of color separation is useful. While there are different ways to measure the color separation, the degree of color separation in the present invention is measured in terms of the root mean square of the output angle $\theta_{out}$, as defined in the following equation

$$DCS = \sqrt{< (\theta_{out} - <\theta_{out}>)^2 >}, \qquad \text{Equation (3)}$$

where

$$<\theta_{out}^2> = \frac{1}{300}\int_{400}^{700}\theta_{out}^2(\lambda)d\lambda \qquad \text{Equation (4.1)}$$

$$<\theta_{out}> = \frac{1}{300}\int_{400}^{700}\theta_{out}(\lambda)d\lambda \qquad \text{Equation (4.2)}$$

The notation <> represents the average over the wavelength between 400 nm and 700 nm.

In a simplified version, only at three wavelengths 450 nm, 550 nm, and 650 nm, the output angles $\theta_{out}$ are considered. The averages are defined in the following equations,

$$<\theta_{out}^2> = \frac{1}{3}(\theta_{out}^2(450) + \theta_{out}^2(550) + \theta_{out}^2(650)) \quad \text{Equation (5.1)},$$

$$<\theta_{out}> = \frac{1}{3}(\theta_{out}(450) + \theta_{out}(550) + \theta_{out}(650)) \quad \text{Equation (5.2)}.$$

In the following examples, the simplified version of the averages is used. It serves the purpose of comparison adequately.

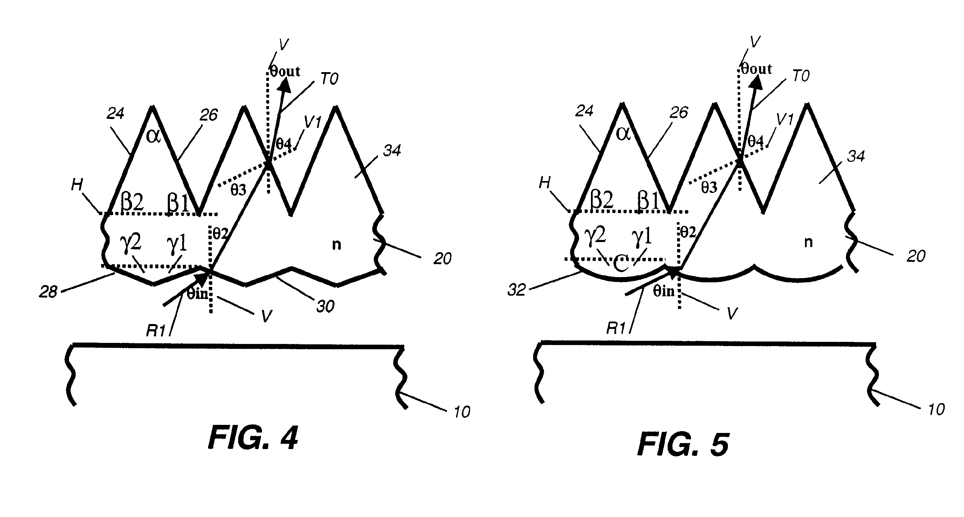

Referring to Figures 4 and 5, key features of the improved turning film 20 of the present invention are shown. Prismatic structures again face upward (more generally, facing outward toward the viewer and toward the LC device or other light modulator). Each prismatic structure has a near surface 24 and a far surface 26, with reference to the location of light source 12 (Figure 1). Far surface 26 is the light emission or exit surface as was shown in Figure 2A. Referring to Figure 4, in addition to the prismatic structures facing upward, there are prismatic structures facing downward toward light guiding plate 10, which are characterized by a near base angle $\gamma_2$ and a far base angle $\gamma_1$ (being near or far relative to light source 12, as shown in the embodiment of Figure 1). The output angle $\theta_{out}$ of light delivered to the LC display element from the structured output surface of turning film 20 is determined by a number of factors including the central input principal angle $\theta_{in}$, the refractive index n of turning film 20, the base angle β1 at which far surface 26 is slanted at an oblique angle relative to horizontal direction H, and the near base angle $\gamma_2$ at which near surface 28 is slanted at an oblique angle relative to horizontal direction H.

In embodiments of the present invention, output angle $\theta_{out}$ is determined by input angle $\theta_{in}$, refractive index n of the prismatic structure, the far base angle $\beta_1$, and the near base angle $\gamma_2$, as described by equation (3)

$$\theta_{out} = \beta_1 - \arcsin\left\{n\sin\left[\beta_1 - \gamma_2 - \arcsin\left(\frac{\sin(\theta_{in} - \gamma_2)}{n}\right)\right]\right\}. \quad \text{Equation (3)}$$

It will be apparent that the output angle $\theta_{out}$ from equation (3) is less wavelength dependent upon reading the discussion referring to Table 1 in the following.

Referring back to Figure 4, with the proper oblique slant (with respect to flat surface 22) given to far surface 26 and near surface 28, incident light about a central illumination ray R1, also termed the principal ray, on near surface 28 is suitably redirected toward the target angle, film normal direction V. In one embodiment, prismatic structures are elongated linearly in an elongation direction along the surface of turning film 20, so that each prismatic structure extends in a line from one edge of the output surface to another. With respect to cross-sectional views such as those of Figures 4, the linear elongation direction is normal to the page. It can be appreciated that this arrangement has advantages for fabrication of turning film 20. However, there is no requirement that prismatic structures be arranged in such an extended linear fashion. What is important is the angular relationship of the various surfaces of the prismatic structures relative to the angle of incident light from light guiding plate 10, as shown in the cross-sectional side view of Figure 4.

Referring to Figures 5, in addition to the prismatic structures facing upward, there are lenticular structures facing downward toward light guiding plate 10. The output angle $\theta_{out}$ of light delivered to the LC display element from the structured output surface of turning film 20 is determined by a number of factors including the central input principal angle $\theta_{in}$, the refractive index n of turning film 20, the base angle β1 at which far surface 26 is slanted at an oblique angle relative to horizontal direction H, and the curvature C of the lenticular structures facing downward toward light guiding plate 10. Similar to Figure 4, base angles $\gamma_1$ and $\gamma_2$ can also be defined with respect to the lenticular structures.

With the proper oblique slant (with respect to flat surface 22) given to far surface 26 and with the proper curvature C given to lenticlular surface 30, incident light about a central illumination ray R1, also termed the principal ray, on lenticlular surface 30 is suitably redirected toward the target angle, film normal direction V. In one embodiment, prismatic structures are elongated linearly in an elongation direction along the surface of turning film 20, so that each prismatic structure extends in a line from one edge of the output surface to another. With respect to cross-sectional views such as those of Figures 5, the linear elongation direction is normal to the page. It can be appreciated that this arrangement has advantages for fabrication of turning film 20. However, there is no requirement that prismatic structures be arranged in such an extended linear fashion. What is important is the angular relationship of the various surfaces of the prismatic structures relative to the angle of incident light from light guiding plate 10, as shown in the cross-sectional side view of Figure 5.

**Table 1**

|  | Ex. 1.1 | Ex. 1.2 | Ex. 1.3 |
|---|---|---|---|
|  | DCS ($\gamma_2$=0) | DCS ($\gamma_2$=10°) | DCS ($\gamma_2$=20°) |
| PET | Very large | 1.23° | 0.79° |
| Polysulfone | 2.16° | 1.33° | 0.95° |

Table 1 summarizes the DCS for the comparative and inventive examples. In the comparative Example 1.1, the turning film has base angles $\beta_1$ = 66.0°, $\beta_2$ = 66.0°. The turning film is made of either polysulfone (its refractive index n is approximately 1.670 at the wavelength λ of 450 nm (blue light), 1.642 at 550 nm (green light), and 1.628 at 650 nm (red light)) or PET (n ≈ 1.787 at the wavelength λ of 450 nm, 1.766 at 550 nm, and 1.754 at 650 nm). The principal angles for all the three wavelengths are the same as $\theta_{in}$ = 70°. It follows from equations (1), (3), (5.1), and (5.2) that the DCS is 2.16° for polysulfone. For PET, the light takes the path of ray 30a as shown in Figure 2D, thus the DCS is too large to quantify. The important thing is that the DCS is very large.

The inventive Example 1.2 is the same as Example 1.1 except that the turning film has additional prismatic structures on its bottom surface as shown in Figure 4, and the prismatic structures are characterized by base angles $\gamma_2$ =10.0 ° and $\gamma_1$ = 20°. In general, the condition $\gamma_1 \geq 90°$ - $\theta_{in}$ is satisfied. The turning film of this example shows that the DCS is reduced; the DCS is 1.23° for PET and 1.33° for polysulfone.

The inventive Example 1.3 is the same as Example 1.2 except that the prismatic structures on the bottom surface are characterized by base angles $\gamma_2$ = 20.0° and $\gamma_1$ = 20°. The DCS is reduced further; the DCS is 0.79° for PET and 0.95° for polysulfone.

In general, the far base angle $\beta_1$ is preferably in the range of 50° to 70°. The near base angle $\gamma_2$ is preferably in the range of 10° to 20°. Outside of this range, the degree of color separation DCS is still sufficiently large or the range of the output angle is not desired.

Light guiding plate providing varying principle angles for different wavelengths

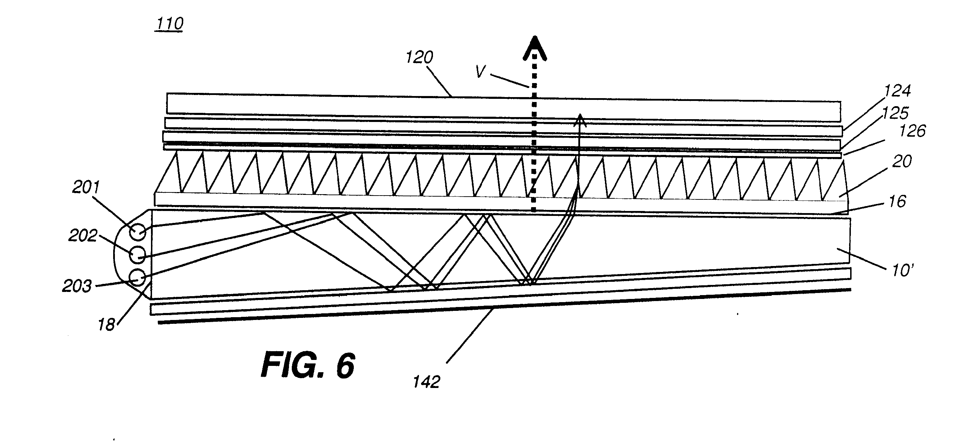

Referring next to Figure 6, there is shown another solution to reduce color separation according to the present invention, using a light guiding plate 10' to provide varying principle angles for different wavelengths. The light guiding plate may have microstructures on its bottom and top surfaces. Two or more individual light sources such as light emitting diodes (LEDs) generate light of different wavelengths. Three representative individual light sources 201, 202, 203 are vertically arranged at the side of the light guiding plate to produce different wavelengths. It is also possible that the individual light sources are shifted in both vertical and horizontal directions. The individual light sources may have different sizes or other characteristics. When the arrangement of the light sources and the light guiding plate are properly designed in any known ways such as through optics modeling or experimentation, the light guiding plate 10' can provide desired principle angles for different wavelengths. In comparison, a single conventional CCFL light source cannot independently change the output light distribution for different wavelengths, thus it is not suitable for this application. However, two or more CCFL under different driving conditions may produce different principal angles for different wavelengths when properly coupled with the light guiding plate. In addition, a weak diffuser 126 can be optionally placed between the turning film 20 and the light gating device 120. The weak diffuser also somewhat reduces color separation, but it cannot completely remove the color separation because it cannot cause too much scattering to the light passing through the turning film.

**Table 2**

| Ex. | $\beta_1$ | $\beta_2$ | $\lambda$ (nm) | N | $\theta_{in}$ | $\theta_{out}$ | DCS |
|---|---|---|---|---|---|---|---|
| 2.1 | 66.0° | 66.0° | 450 | 1.670 | 70° | 4.5° | |
| | | | 550 | 1.642 | 70° | 8.0° | |
| | | | 650 | 1.628 | 70° | 9.7° | 2.16° |
| 2.2 | 66.0° | 66.0° | 450 | 1.670 | 70° | 4.5° | |
| | | | 550 | 1.642 | 63° | 4.1° | |
| | | | 650 | 1.628 | 61° | 4.0° | 0.22° |
| 2.3 | 66.0° | 66.0° | 450 | 1.670 | 78° | 9.0° | |
| | | | 550 | 1.642 | 72° | 9.3° | |
| | | | 650 | 1.628 | 70° | 9.7° | 0.29° |
| 2.4 | 68.0° | 68.0° | 450 | 1.670 | 70° | -0.1° | |
| | | | 550 | 1.642 | 66° | 0.7° | |
| | | | 650 | 1.628 | 64° | 0.8° | 0.40° |
| 2.5 | 68.0° | 68.0° | 450 | 1.670 | 71° | 0.8° | |
| | | | 550 | 1.642 | 66° | 0.7° | |
| | | | 650 | 1.628 | 63° | -0.4° | 0.54° |

Table 2 shows inventive and comparative examples that illustrate how the DCS is reduced for the turning film 20 under various conditions and using various light guiding plates coupled with individual light sources that determine the principle angles of light of different wavelengths.

In comparative Example 2.1, base angles $\beta_1$ = 66.0°, $\beta_2$ = 66.0°. The turning film is made of polysulfone. The principal angles for all the three wavelengths are the same as $\theta_{in}$ = 70°. The output angles $\theta_{out}$ vary by more than 5°, and are 4.5° for $\lambda$ = 450 nm, 8.0° for $\lambda$ = 550 nm, and 9.7° for $\lambda$ = 650 nm, which can be derived from equation (1). The DCS is 2.16° derived from equations (3), (5.1), and (5.2).

The inventive Example 2.2 is the same as Example 2.1 except that the principal angles change with wavelength. The principal angles $\theta in$ are 70° for $\lambda$ = 450 nm, 63° for $\lambda$ = 550 nm, and 61° for $\lambda$ = 650 nm. As a result, the output angles $\theta_{out}$ vary by smaller than 1°, and are 4.5° for $\lambda$ = 450 nm, 4.1° for $\lambda$ = 550 nm, and 4.0° for $\lambda$ = 650 nm. The smaller variation in the output angles for different wavelengths indicates less color separation, which is also reflected in the smaller DCS of 0.22°. This inventive example suggests that it is possible to reduce the degree of color separation by introducing a light guiding plate that emits light with principle angle varying with the wavelength. It is preferred that the principle angle for the blue light ($\lambda$ = 450 nm) is greater than the one for the green light ($\lambda$ = 550 nm), which is greater than the one for the red light ($\lambda$ = 650 nm). It is also preferred that the difference between the principle angles for the blue and green light is greater than the difference between the principle angles for the green and red light.

The inventive Example 2.3 is the same as Example 2.2 except that the principal angles $\theta_{in}$ are 78° for $\lambda$ = 450 nm, 72° for $\lambda$ = 550 nm, and 70° for $\lambda$ = 650 nm. Consequently, the output angles $\theta_{out}$ are adjusted to be close to 9.0° compared to about 4.0° in Example 2.2. Likewise, the output angles $\theta_{out}$ vary by smaller than 1°, and the DCS has a small value of 0.29°.

Compared to Example 2.2, the inventive Example 2.4 has different base angles and principal angles. The base angles are $\beta_1$ = 68.0°, $\beta_2$ = 68.0°, and the principal angles $\theta_{in}$ are 78° for $\lambda$ = 450 nm, 72° for $\lambda$ = 550 nm, and 70° for $\lambda$ = 650 nm. They are chosen to produce the output angles $\theta_{out}$ to be close to 0.0°, or near the normal direction. The output angles $\theta_{out}$ vary by smaller than 1°, and the DCS has a small value of 0.40°.

The inventive Example 2.5 is the same as Example 2.4 except that the principal angles $\theta_{in}$ are 71° for $\lambda$ = 450

nm, 66° for λ = 550 nm, and 63° for λ = 650 nm. They are also chosen to produce the output angles $\theta_{out}$ to be close to 0.0°, or near the normal direction. The output angles $\theta_{out}$ are 0.8° for λ = 450 nm, 0.7° for λ = 550 nm, and -0.4° for λ = 650 nm. The DCS has a small value of 0.54°. In this example the output angle for the blue light (λ = 450 nm is greater than the one for the green light (λ = 550 nm), which is greater than the one for the red light (λ = 650 nm), while in Example 2.2 through Example 2.4, the output angle for the blue light (λ = 450 nm) is smaller than the one for the green light (λ = 550 nm), which is smaller than the one for the red light (λ = 650 nm).

The above inventive Example 2.2 through Example 2.5 are exemplary only. Other variations are all possible.

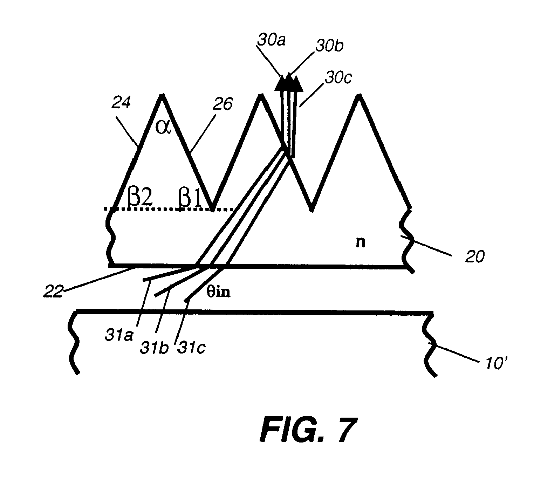

Figure 7 is an explode view of Figure 6, showing rays 31a, 31b, 31 c of different wavelengths or colors coming out of the light guiding plate 10' and emerging from the turning film 20 as rays 30a, 30b, 30c. These rays have much smaller angular separation.

Materials for Forming Turning Film 20

Turning film 20 used in the present invention can be fabricated using materials having a relatively high index of refraction, including sulfur-containing polymers, particularly polythiourethane, polysulfide and the like. Materials of high index of refraction also include polycarbodiimide copolymers which are excellent in heat stability and has high workability and moldability, as is disclosed in US Patent Application Publication No. 2004/0158021 entitled "Polycarbodiimide having high index of refraction and production method thereof" by Sadayori et al., published on Aug. 12, 2004. Indices of refraction for these materials varied from 1.738 to 1.757 at 589 nm. Materials with doped microspheres or beads of high index materials such as titania, zirconia, and baria also show high indices of refraction that may be smaller or greater than 1.7, as disclosed in US Patent Application Publication No. 2004/0109305 entitled "HIGH INDEX COATED LIGHT MANAGEMENT FILMS" by Chisholm et al. Materials of high index of refraction also include many polyesters such as polyethylene naphthalate (PEN) and Polybutylene 2,6-Naphthalate (PBN). These materials have refractive indices varying from about 1.64 to as high as about 1.9, as discussed in U.S. Patent No. 6,830,713 entitled "Method for making coPEN/PMMA multilayer optical films" to Hebrink et al. Other known materials having a high index of refraction can be used as well.

The patents and other publications referred to herein are incorporated by reference.

**PARTS LIST**

10, 10'. Light guiding plate
12. Light source
16. Output surface
18. Input surface
20. Turning film
22. Flat surface
24. Near surface
26. Far surface
30a, 30b, 30c. Rays
31a, 31b, 31c. Rays
34. Prismatic structure
82. Point light source
100, 110. Display apparatus
120. Light gating device
122. Turning film
124. Polarizer
125. Reflective polarizer
126. weak diffuser
142. Reflective surface
201. Light source for blue light
202. Light source for green light
203. Light source for red light.

α. Apex angle
β1. base angle
β2. base angle

$\gamma_1$. base angle
$\gamma_2$. base angle
n. Refractive index
$\theta_{in}$. Incident angle
$\theta_{out}$. Output angle
V. Film normal direction
V1. Normal direction on the far surface
H. Horizontal direction
R1. Central illumination ray

**Claims**

1. A turning film comprising a light entry and a light exit surface comprising first prismatic structures on the exit surface and second prismatic structures or lenticular structures on the light entry surface, wherein

   (a) the first prismatic elements are **characterized by** a far base angle ($\beta_1$) and a near base angle ($\beta_2$); and
   (b) the second prismatic or lenticular elements are **characterized by** a far base angle ($\gamma_1$) and a near base angle ($\gamma_2$);

   provided that the values of the angles in subparagraphs (a) and (b) are selected to provide a reduced degree of color separation compared to the same film with only the first prismatic elements on the exit surface.

2. A turning film of claim 1 providing a degree of color separation smaller than 1.4.

3. A turning film of claim 1 providing a degree of color separation smaller than 1.0.

4. A turning film of claim 1 further **characterized by** the far base angle $\beta_1$ in a range of 50° to 70°.

5. A turning film of claim 1 further **characterized by** the near base angle $\gamma_2$ in a range of 10° to 20°.

6. A backlight device comprising the film of claim 1 and a light source.

**FIG. 1**

*PRIOR ART*

EP 1 967 789 A1

**FIG. 2A**

**FIG. 2B**

EP 1 967 789 A1

**FIG. 2C**

**FIG. 2D**

EP 1 967 789 A1

*FIG. 3*

**FIG. 5**

**FIG. 4**

FIG. 6

**FIG. 7**

EP 1 967 789 A1

**European Patent Office**

**EUROPEAN SEARCH REPORT**

Application Number

EP 08 15 2486

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| P,X | US 2007/064294 A1 (HOSHINO TETSUYA [JP] ET AL) 22 March 2007 (2007-03-22)<br>* paragraph [0064]; figure 4 *<br>* paragraph [0068] - paragraph [0071]; figure 6 *<br>* paragraph [0089] - paragraph [0093]; figure 10 *<br>* paragraph [0129] * | 1-6 | INV.<br>F21V8/00 |
| X | -& WO 2004/104658 A (HITACHI CHEMICAL CO LTD [JP]; HOSHINO TETSUYA [JP]; SUGIMOTO YASUSHI []) 2 December 2004 (2004-12-02)<br>----- | 1-6 | |
| X | US 2007/040950 A1 (JUNG IL-YONG [KR]) 22 February 2007 (2007-02-22)<br>* paragraph [0038]; figure 6 *<br>----- | 1-6 | |
| X | US 2006/138702 A1 (BIERNATH ROLF W [US] ET AL) 29 June 2006 (2006-06-29)<br>* paragraph [0098]; figure 3d *<br>* paragraph [0154] *<br>----- | 1-6 | |
| X | US 2004/218390 A1 (HOLMAN ROBERT L [US] ET AL) 4 November 2004 (2004-11-04)<br>* paragraphs [0164], [0165]; figures 5a,5b *<br>* paragraph [0177]; figure 8 *<br>----- | 1-6 | TECHNICAL FIELDS SEARCHED (IPC)<br>G02B<br>F21V |
| X | US 2005/191026 A1 (MIYASHITA JUNJI [JP]) 1 September 2005 (2005-09-01)<br>* figures 4,7 *<br>----- | 1-6 | |
| X | WO 2006/098940 A (3M INNOVATIVE PROPERTIES CO [US]) 21 September 2006 (2006-09-21)<br>* paragraphs [0048], [0049]; figures 1,2 *<br>-----<br>-/-- | 1-6 | |

The present search report has been drawn up for all claims

| Place of search | Date of completion of the search | Examiner |
|---|---|---|
| Berlin | 27 June 2008 | Ciarrocca, Marco |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

**EUROPEAN SEARCH REPORT**

Application Number

EP 08 15 2486

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| D,A | US 7 139 125 B1 (MI XIANG-DONG [US]) 21 November 2006 (2006-11-21) * column 3, line 51 - line 54 * * column 7, line 57 - column 8, line 60; figure 3a * ----- | 1,6 | |
| | | | **TECHNICAL FIELDS SEARCHED (IPC)** |

The present search report has been drawn up for all claims

| Place of search | Date of completion of the search | Examiner |
|---|---|---|
| Berlin | 27 June 2008 | Ciarrocca, Marco |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 08 15 2486

This annex lists the patent family members relating to the patent documents cited in the above-mentioned European search report.
The members are as contained in the European Patent Office EDP file on
The European Patent Office is in no way liable for these particulars which are merely given for the purpose of information.

27-06-2008

| Patent document cited in search report | | Publication date | Patent family member(s) | | Publication date |
|---|---|---|---|---|---|
| US 2007064294 | A1 | 22-03-2007 | CN | 1795403 A | 28-06-2006 |
| | | | WO | 2004104658 A1 | 02-12-2004 |
| | | | KR | 20060013548 A | 10-02-2006 |
| | | | TW | 274178 B | 21-02-2007 |
| WO 2004104658 | A | 02-12-2004 | CN | 1795403 A | 28-06-2006 |
| | | | KR | 20060013548 A | 10-02-2006 |
| | | | TW | 274178 B | 21-02-2007 |
| | | | US | 2007064294 A1 | 22-03-2007 |
| US 2007040950 | A1 | 22-02-2007 | CN | 1916730 A | 21-02-2007 |
| | | | NL | 1032332 A1 | 20-02-2007 |
| US 2006138702 | A1 | 29-06-2006 | EP | 1828817 A1 | 05-09-2007 |
| | | | WO | 2006071621 A1 | 06-07-2006 |
| US 2004218390 | A1 | 04-11-2004 | US | 2005185419 A1 | 25-08-2005 |
| US 2005191026 | A1 | 01-09-2005 | CN | 1655032 A | 17-08-2005 |
| | | | DE | 102005006586 A1 | 27-10-2005 |
| | | | JP | 2005228584 A | 25-08-2005 |
| | | | KR | 20060041800 A | 12-05-2006 |
| WO 2006098940 | A | 21-09-2006 | CN | 101171532 A | 30-04-2008 |
| | | | EP | 1861736 A1 | 05-12-2007 |
| | | | KR | 20070108568 A | 12-11-2007 |
| US 7139125 | B1 | 21-11-2006 | WO | 2007070246 A1 | 21-06-2007 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5592332 A, Nishio
- US 6111696 A, Allen
- US 6280063 B, Fong
- US 6746130 B, Ohkawa
- US 5982540 A
- US 6172809 A
- US 6027220 A
- US 6079841 A
- US 302011 A
- US 300659 A
- US 7139125 B
- US 20040158021 A
- US 20040109305 A
- US 6830713 B

**Non-patent literature cited in the description**

- **WARREN J. SMITH.** Modern Optical Engineering. McGraw-Hill, 2000